# NEW EUROPEAN PATENT SPECIFICATION

(11) **EP 2 645 912 B2**
(45) Date of publication and mention of the opposition decision: **07.05.2025**
(45) Mention of the grant of the patent: 14.06.2017
(21) Application number: 11791532.2
(22) Date of filing: 01.12.2011
(51) Int. Cl.: A47J 31/44

(54) **SIMPLE USER-INTERFACE FOR A BEVERAGE MACHINE**
EINFACHE BENUTZERSCHNITTSTELLE FÜR EINE GETRÄNKEMASCHINE
INTERFACE UTILISATEUR SIMPLE POUR UNE MACHINE POUR BOISSON

(30) Priority: 01.12.2010 EP 10193235
(43) Date of publication of application: 09.10.2013
(73) Proprietor: Société des Produits Nestlé S.A., 1800 Vevey (CH)
(72) Inventor: MAISCH, Rainer, 4537 Wiedlisbach (CH)
(74) Representative: Rupp, Christian
(86) International application number: PCT/EP2011/071562
(87) International publication number: WO 2012/072767

(56) References cited:
- EP-A1- 2 194 824
- EP-A1- 2 196 117
- EP-A1- 2 252 182
- EP-A2- 1 554 958
- EP-B1- 1 833 750
- WO-A1-2009/130099
- WO-A1-2009/130099
- WO-A1-2010/037806
- WO-A1-2010/037806
- WO-A2-2007/003990
- WO-A2-2007/003990
- WO-A2-2008/006556
- WO-A2-2008/006556
- CH-A5- 693 016
- CH-A5- 693 016
- DE-A1- 102009 059 176
- DE-A1- 102009 059 176
- DE-U1- 20 100 700
- US-A1- 2002 096 054
- YOUTUBE VIDEO, Retrieved from the Internet <URL:https://www.youtube.com/watch?v=JO9S1 rBDCxO>
- ANONYMOUS: "HD7850", PHILIPS, pages 1 - 28
- ANONYM: "Royal Office Type SUP 015V", SAECO, 1 March 2001 (2001-03-01), pages 1 - 29, XP055477468
- ANONYMOUS: "Magic Superautomatica de luxe Type SUP 012", SAECO®, pages 1 - 123
- USER MANUAL AND DEVICE LAVAZZA BLUE LB2210
- Screenshot des archivierten, ausführlichen Tests
- Archivierter Test als PDF

## Description

### Field of the Invention

The field of the invention pertains to beverage preparation machines, in particular using capsules of an ingredient of the beverage to be prepared, such as a beverage preparation machines having a user-interface for allowing a user to control the machine and/or receive information regarding a state and/or a carried out process of the machine.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient.

### Background Art

Certain beverage preparation machines use capsules containing ingredients to be extracted or to be dissolved; for other machines, the ingredients are stored and dosed automatically in the machine or else are added at the time of preparation of the drink.

Most coffee machines possess filling means that include a pump for liquid, usually water, which pumps the liquid from a source of water that is cold or indeed heated through heating means, such as a heating resistor, a thermoblock or the like. Such machine typically have a brewing unit for holding and extraction the beverage ingredient. To introduce the ingredient into the brewing unit and then remove the ingredient upon use, the brewing unit has a closure mechanism that may be driven by a handle that is operable by a user. Various configurations for manipulating the machine have been disclosed in the art. EP 1 208 782, EP 1 829 469, US 2008/0006159, US 7,165,488 and WO 2007/111884 disclose such beverage machines.

More recently, efforts have been specifically devoted to the ease of operation of a beverage preparation machine for a user and ergonomic configuration of such machines, as illustrated in EP 1 878 368, EP 1 864 598, WO 2009/074553 and WO 2010/015427.

For allowing the user to control machine operation various systems have been disclosed in the art, for instance as mentioned in the following references: AT 410 377, CH 682 798, DE 44 29 353, DE 202 00 419, DE 20 2006 019 039, DE 2007 008 590, EP 1 448 084, EP 1 676 509, EP 08155851.2, FR 2 624 844, GB 2 397 510, US 4,377,049, US 4,458,735, US 4,554,419, US 4,767,632, US 4, 954, 697, US 5,312,020, US 5,335,705, US 5,372,061, US 5,375,508, US 5,731,981, US 5,645,230, US 5,836,236, US 5,959,869, US 6,182,555, US 6,354,341, US 6,759,072, US 2007/0157820, WO 97/25634, WO99/50172, WO 2004/030435, WO 2004/030438, WO 2006/063645, WO 2006/090183, WO 2007/003062, WO 2007/003990, WO 2008/104751, WO 2008/138710, WO 2008/138820, WO 2009/135821, WO 2010/003932 and WO 2010/037806 and PCT/EP10/061801.

In the field of coffee machines, in particular coffee machines using ground coffee capsules, it is well known to provide a user-interface with a power switch for shutting on and off the machine, a first button for requesting the dispensing of ristretto-size or espresso-size coffee and a second button for requesting the dispensing or regular-size or lungo-size coffee. The beverage volumes associated with each of the two buttons may usually be re-programmed by a user to fit his or her individual preferences. Various LEDs are usually provided to indicate a states of the machine, e.g. a start-up state, a standby state, a beverage dispensing state, a readiness state, etc...

### Summary of the Invention

A preferred object of the present invention is to provide a simple, reliable and/or inexpensive user-interface arrangement for a user-control of functions of a beverage preparation machine.

The invention relates to a machine for preparing a beverage. For instance, the machine is a coffee, tea, chocolate, cacao, milk or soup preparation machine. In particular, the machine is arranged for preparing within a beverage processing module a beverage by passing hot or cold water or another liquid through a capsule containing an ingredient, such as a flavouring ingredient, of the beverage to be prepared, such as ground coffee or tea or chocolate or cacao or milk powder.

Such beverage preparation typically includes the mixing of a plurality of beverage ingredients, e.g. water and milk powder, and/or the infusion of a beverage ingredient, such as an infusion of ground coffee or tea with water. For instance, a predetermined amount of beverage is formed and dispensed on user-request, which corresponds to a serving. The volume of such a serving may be in the range of 25 to 200 ml, e.g. the volume for filling a cup or mug, depending on the type of beverage. Formed and dispensed beverages may be selected from ristrettos, espressos, lungos, cappuccinos, café latte, americano coffees, teas, etc... In particular, a coffee machine may be configured for dispensing espressos, e.g. an adjustable volume of 20 to 60 ml per serving, and/or for dispensing lungos, e.g. a volume in the range of 70 to 150 ml per serving.

In particular, the beverage preparation machine includes:
- an ingredient processing module for processing at least one ingredient, in particular an ingredient supplied within a capsule into the module;
- a sensing arrangement for sensing a user-request by a user-actuation of the sensing arrangement; and
- a control unit containing different control programs for controlling the ingredient processing module executable on corresponding user-requests.

As discussed above, the ingredient is optionally inserted into the processing module and/or evacuated therefrom within an ingredient capsule, e.g. an aluminium or plastic or paper enclosure containing the ingredient.

In accordance with the invention, the sensing arrangement and the control unit are so arranged that each of said different user-requestable control programs is executed on a user-actuation of the sensing arrangement only.

With an appropriate user-logic, different operations can be carried out by using only one button or other simple interface device, e.g. a user-sensing arrangement having a single actuation state detection i.e. actuation detected or not detected. All operations that can be requested by a user may be controlled by the same interface device. In the most simple configuration, all user-requests may be acquired by the control unit via the same user-actuation irrespectively of the length and repetition of actuation. In an optional configuration, the control unit may be configured to differentiate between the number of user-actuations and/or the duration of user-actuation of the same interface device sensing the same user-actuation. The logic of the control unit is configured to discriminate between user-requests accordingly. Whereas, in this latter embodiment, the requests may be differentiated as to the number and/or length of actuation of the sensing arrangement, the manner of actuating the sensing arrangement, e.g. the actual contacting a certain location of the arrangement or the actual pushing a certain element of the arrangement, is generally always the same irrespective of the kind of user-request. For instance, only one press-button is provided which the user may actuate by depressing completely, irrespective of the length of the depression and/or number of depression.

The identification of the relevant user-request linked to a particular actuation of the sensing arrangement among all possible user-requests selectable by a generally identical actuation of the sensing arrangement is carried out based on the particular state of the machine at the time of the user-actuation.

Two user-actuations of the sensing arrangement are considered to be "generally identical" when the same information is derived by the control unit from the sensing arrangement. With the exception of discrimination between repeated actuations and/or duration-based actuations, the identification of a particular user-request is achieved via the user-logic in the control unit of the machine.

Hence, the user-interface, in particular the user-input interface, of the beverage machine of the invention is simplified so that various different user-requests are communicated to the beverage machine via the same sensing arrangement by the same user-actuation. It follows that a multitude of selectors and/or touch screens with sensing matrix for discriminating between different spatial locations of user-actuation of the interface is no more necessary. Depending on the timing of the user-actuation of the single sensing arrangement, the control unit is programmed to derive a specific user-request in particular based on the state of the machine at the time of the user-actuation.

It follows that fewer or less complex interface devices are needed to control the full range of the machine's user-functionalities. Thus, fewer interface components are needed which reduces the machine's production costs and fewer components are exposed to failure during the machine's lifetime which reduces the maintenance costs. Moreover, by having to manage only one sensing arrangement, e.g. button, the operation of the machine is made easier for the user.

The sensing arrangement can be a single user-selector selected from touch, push, turn, and toggle user-selectors such as a touch pad, a touch-plate, a push button, a turn button or a toggle lever, in particular an automatic return toggle lever.

Hence, a simple and/or low cost user-input device can be used for requesting all user-requestable processes of the machine.

The control unit may contain a user-requestable powering program for starting up the machine on user-actuation of the sensing arrangement in a shut-off state, optionally such machine comprising a thermal conditioner, such as a heater, that is powered to reach an operative temperature during start up. Hence, the sensing arrangement may also be used as a power switch of the machine.

Alternatively, it is possible that a mere plugging of the power cord to the mains initiates the powering program of the machine.

The ingredient processing module may include a motorized ingredient handling unit that has a holding configuration for preparing a beverage therefrom and a loading configuration for loading said ingredient into the handling unit. The control unit can be arranged to bring the handling unit automatically into the holding configuration at shut-off and into the loading configuration upon start-up. An intermediate configuration may be provided during a transition between different machine states, e.g. between an operative state and a shut-off state or for an indication of a machine disorder or to indicate that the machine is busy. The control unit may be arranged to bring the handling unit automatically into the loading configuration at an end of a beverage preparation.

For example, the handling unit comprises a first part and a second part movable relative to the first part from a position for housing therein an ingredient to a transfer position for loading this ingredient into the handling unit and/or for evacuation thereof from the handling unit. For instance, the first and second parts are associated with: a passage for inserting this ingredient into the handling unit and/or evacuating such ingredient therefrom; and optionally a gate driven by the movable second part and associated with the passage and movable between a position opening the passage and a position closing the passage. Such gate may be used to prevent projections of hot liquid and/or vapour out of the capsule passage and/or to indicate to a user when the handling unit is in state for receiving the ingredient and when it is not, respectively.

The control unit may comprise an auto-shut off module for shutting off such machine automatically, in particular a module including a timer and/or a beverage preparation counter, such as a user-programmable auto-shut off module. Hence, no user-interface may be needed for shutting off the machine. Timer-based auto-shut off devices are well known in the art. A serving-based auto-shut off device is disclosed in EP 2 252 182.

The control unit contains a user-requestable beverage preparation program. Such program typically includes the control of various machine components for circulating and conditioning a liquid via the processing module to turn prepare a desired beverage.

The control unit can be arranged to register a beverage user-request via the sensing arrangement after powering or start-up of such machine. The machine may include an ingredient sensor in or adjacent to the ingredient processing module, the ingredient sensor being connected to the control unit, the control unit being arranged to register a beverage user-request via the sensing arrangement when a beverage ingredient is sensed.

The control unit can contain a user-requestable beverage stop program, the control unit being arranged to register a beverage stop request via the sensing arrangement during execution of a beverage preparation program. In this case, start and stop of the beverage preparation for dispensing a serving are manual. Alternatively, the machine may be configured to prepare beverages for dispensing beverage servings of a single volume only.

The control unit contains a first and a second user-requestable beverage preparation program, the first program being requestable by a single user-actuation of the sensing arrangement, the second user-requestable beverage preparation program being requestable by a repeated-user actuation of the sensing arrangement, such as a double user-actuation of the sensing arrangement.

As mentioned above, the control unit may be configured to register successive user-actuations within a limited time frame, e.g. one or two seconds, for discriminating between different programs selectable at the same point in time. Alternatively, the control unit may be configured so that only no more than one user-requestable program is requestable at any point in time so that no options are available to a user at any point in time, even though several user-requestable different programs are available to a user over time linked to the different states of the machine. The latter configuration reduces the flexibility of the machine but simplifies the control of the machine by a user who is not confronted to different operating options.

The control unit may contain a beverage preparation program that has a parameter which is user-programmable upon executing a user-programming program executed on a predetermined sequence of user-actuations of the sensing arrangement. For instance, a long actuation of the sensing arrangement or a plurality of actuation thereof in a limited time frame or window, e.g. 1 to 2 seconds, will initiate the user-programming program, e.g. for allowing a user to set the volume of a beverage serving, or to set the number of servings or duration of non-use of the machine before automatic shut down.

Alternatively, for user-programming of the control unit, the machine may include a machine interface for connection to an external device, e.g. for uploading a user-program from a portable device such as a USB-key or from a computer interfaced with the machine. Hence, the interface of an external device may be used for complex programming of the machine. This can be justified as such programming will usually be seldom and would not justify a dedicated sophisticated user-interface integrated in the beverage machine that would unnecessarily increase the cost of the machine.

The beverage machine may also incorporate a sensor in or adjacent to the ingredient processing module. The control unit can contains a user-requestable service program, such as a cleaning and/or rinsing program, the control unit being arranged to register a service user-request via the sensing arrangement when no beverage ingredient is sensed or when a service accessory is sensed via the sensor. Optionally, the control unit contains a user-requestable service stop program and is arranged to register a service stop request via the sensing arrangement during execution of the service program.

Advantageously, to reduce the cost of the machine, the machine comprises only one user-indicator, such as a visual and/or sound indicator, for indicating a machine state, such as a LED or a sound generator, optionally the user-indicator being arranged for indicating a plurality of different machine states, in particular by corresponding indication sequences. For instance, continuous lightening/sound may be used to indicate a specific state, intermittent indication or different kind of different indications, e.g. blinking, may be used to indicate other machine states.

Alternatively or cumulatively, one or more machine parts involved in the internal operations of the machine may be visible from outside of the machine so that the user may derive an operational status by observing such parts. In this case, no additional interface part is required to indicate to a user such operation of the machine. For instance, the machine part is a movable part of the handling unit that telescopes in and out according to its loading configuration and beverage processing configuration. Such a telescoping part is for example disclosed in WO 2009/043630.

### Brief Description of the Drawings

The invention will now be described with reference to the schematic drawings, wherein:
- Figures 1 to 6 show part of a machine with a sensing arrangement and a control unit according to invention in different states in an sequence of use;
- Figures 7 and 8 are further views of a similar beverage machine showing in particular part of the ingredient processing module, a motor, a control unit and different user-interface; and
- Figures 7a and 8a illustrate the motorization of a movable part of the processing module shown in Figures 7a and 8a.

### Detailed description

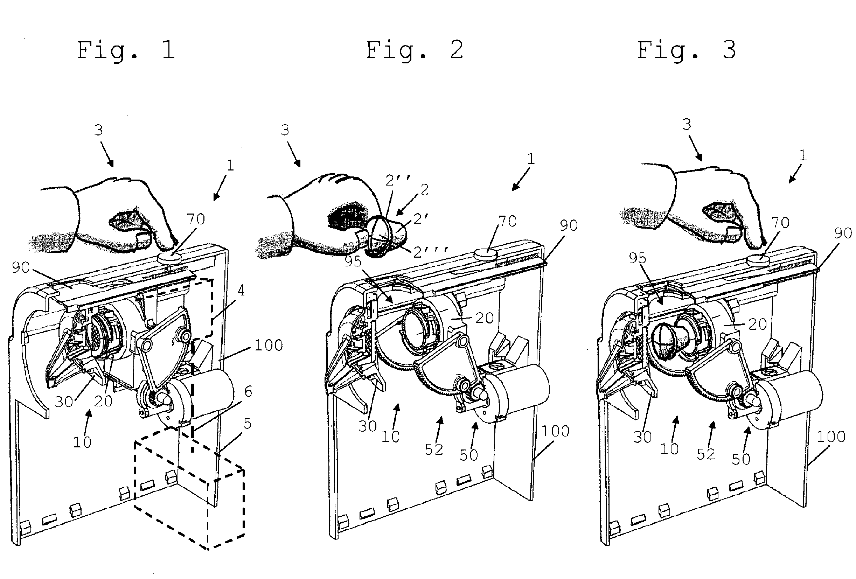

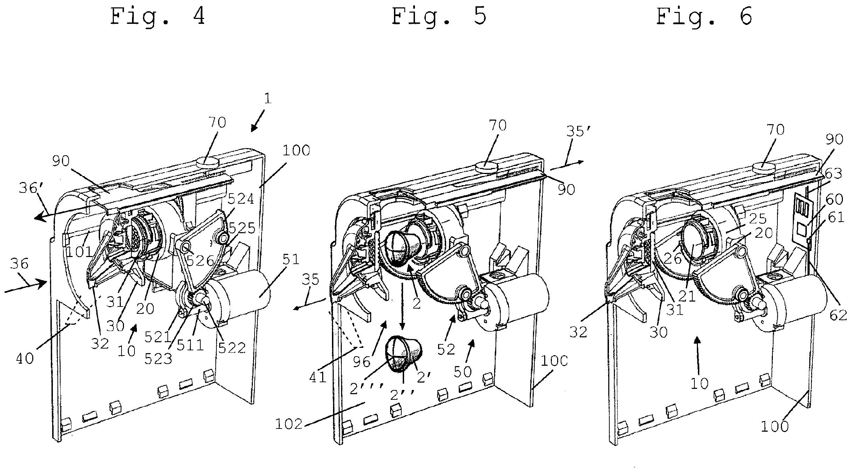

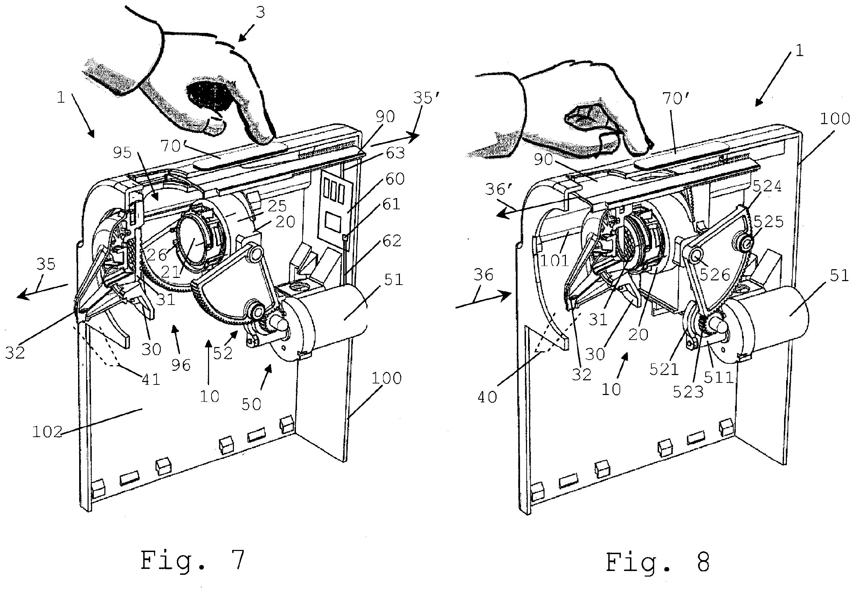

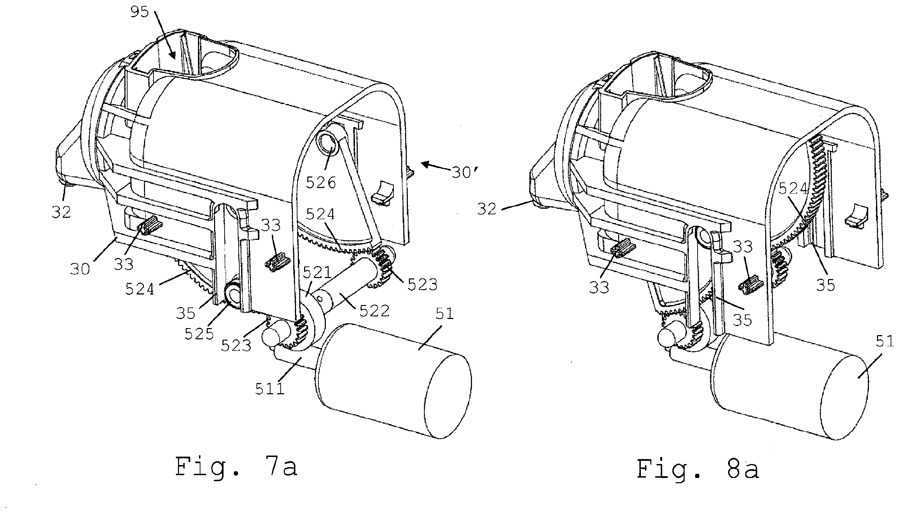

Figures 1 to 8a illustrate an exemplary embodiment of a beverage preparation machine 1 in accordance with the invention. In particular, Figs 1 to 6 illustrate the operation by a user 3 of machine 1 from start up (Fig. 1) over insertion of ingredient capsule 2 (Figs 2 and 3) beverage formation (Fig. 4) to evacuation of used ingredient capsule 2 (Figs 5 and 6). Figures 7 to 8a show in greater details the motorization of machine 1.

Machine 1 has an ingredient processing module 10 with an ingredient handling unit 20,30 that comprises a first part 20 and a second part 30. First and second parts 20,30 are relatively movable from a position for holding (Figs 4, 8 and 8a) and processing therein an ingredient 2 for forming a beverage to a transfer position for loading (Figs 2, 3, 7, 7a) such ingredient 2 into handling unit 20,30 and/or for evacuation (Figs 5, 6, 7, 7a) thereof from unit 20,30. Such ingredient is typically a flavouring ingredient pre-portioned in a capsule 2.

For example, first part 20 of handling unit 20,30 can be more or less fixed in a structure 100, e.g. frame or housing, of machine 1 and second part 30 of handling unit 20,30 may be driven to and away from first part 20 between the transfer and the holding positions. In particular, second part 30 can be movable and has an opening 30', as indicated in Fig. 7a, that may slide back and forth over first part 20. Lateral support elements 33 (Fig. 7a) are provided for guiding second part 30 in slots 101 (Figs 4 and 8) of structure 100. First part 20 defines a chamber 21 and second part 30 has a member 31, e.g. generally shaped as a plate. Chamber 21 and member 31 are spaced apart in Figs 2, 3, 5, 6, 7 and 7a for receiving (loading) and/or evacuating an ingredient 2 therebetween. Chamber 21 and member 31 are brought together in Figs 4, 8 and 8a for delimiting an inner ingredient processing cavity for holding and housing the ingredient, such as tea or coffee or chocolate or powder milk. As mentioned above, the ingredient may be inserted pre-portioned within a capsule 2 into this cavity.

Typically, first and second parts 20,30 in their processing position can be arranged for mixing liquid, such as an incoming flow of hot water, with a flavouring ingredient, e.g. coffee or tea, to form a flavoured beverage. The flavouring ingredient may in particular be supplied as a solid, e.g. ground coffee, tea leaves, powder milk, etc...

In a particular embodiment, first and second parts 20,30 of handling unit 20,30 form a brewing unit, e.g. of a tea or coffee machine. The flavouring ingredient may be supplied within capsule 2 into the brewing unit. The interaction between the brewing unit and the flavouring ingredient, when provided within a capsule, may be of the type disclosed in EP 1 859 714 or in EP 2 205 133.

Parts 20,30 in their holding position may be arranged for holding a pre-portioned flavouring ingredient supplied within capsule 2 while liquid is circulated therethrough to form a beverage. Such a flavouring capsule 2 may have a cup-shaped body 2' with a rim 2" for fixing a lid 2'" thereon, as illustrated in Fig 5. Body 2' has a cavity configured for containing a pre-portioned amount of flavouring ingredient, e.g. from 3 to 12 g ground coffee.

When closed capsules 2 of flavouring ingredients are used, first and second parts 20,30 may include a capsule opener such as blades and/or a tearing tool, e.g. a plate with a tearing profile, for instance as known form Nespresso^{™} machines.

In particular, as schematically indicated in Fig. 1, processing module 10 includes an upstream fluid arrangement, e.g. incorporating a liquid driver, such as a pump 5, and a thermal conditioner, such as a heater 4 and/or cooler, connected via tube 6 to the liquid driver for circulating thermally conditioned liquid, such as water, from a source, e.g. a liquid reservoir typically adjacent housing 100, into the ingredient processing cavity. Examples of upstream fluid arrangements are disclosed in greater details in WO 2009/074550 and in WO 2009/130099.

Moreover, processing module 10 comprises a downstream fluid arrangement with an outlet member 40 (Fig. 4) for dispensing to an area for dispensing beverage to a user, e.g. an area for placing a user-cup or a user-mug, the beverage formed in the cavity containing the ingredient mixed with the circulating liquid. The dispensing area may be delimited at the bottom by a support surface for holding a user cup or mug. Such support surfaces are well known in the art, e.g. as disclosed in EP 1 867 260 and WO 2009/074557.

Outlet member 40 is in fluid communication with the ingredient processing cavity, downstream thereof, via liquid guide member 32. Guide member 32 can be fixed to movable part 30.

Machine 1 may have a collector receptacle (not shown) for collecting used ingredients, such as tea leaves or ground coffee, e.g. within used capsules, and waste liquid. The collector receptacle, e.g. waste collector, may be located in a lower part 102 (Fig. 5) of structure 100 of machine 1 and have an upper compartment for solids and a lower compartment for liquids. Collector receptacle may be insertable, e.g. slidable, into a cavity formed in the machine and removable therefrom for servicing, e.g. emptying the solids and/or liquids contained therein. For example, the storage capacity of the collector receptacle for accumulating used ingredient may be aligned to the storage capacity of reservoir for the supply of liquid such as water, e.g. as taught in PCT/EP10/056194.

Furthermore, processing module 10 can include a drop evacuation member 41 for collecting residual drops in the downstream fluid arrangement when machine 1 is not expected to dispense a beverage; typically when processing module 10 is in the transfer position as illustrated in Fig. 4. Evacuation member 41 is configured to be in fluid configuration with liquid guide member 32 and arranged to evacuated liquid therefrom into a service unit located inside machine 1 generally underneath processing module 10. For example, the service unit is of the type of the above discussed collector receptacle.

The collector receptacle can be positioned underneath parts 20,30 to collect upon beverage preparation the used flavouring ingredient, e.g. ground coffee or tea, evacuated to the receptacle via an ingredient evacuation passage 96 (Fig. 7), e.g. by gravity. The receptacle typically has an anti-clogging arrangement, as for example taught in WO 2009/074559 and in WO 2009/135869, which are hereby incorporated by way of reference.

Ingredient processing module 10 can be configured to circulate automatically the liquid into the cavity containing the ingredient, optionally within a capsule, when first and second parts 20,30 reach the processing position for housing the ingredient. An automatic ingredient recognition system may be used to parameterize the processing of the ingredient automatically such as a temperature of the beverage and volume of the beverage (for a serving).

Beverage machine 1 typically includes one or more of the following components:
a) Processing module 10, e.g. a fluid circuit including an ingredient handling unit 20,30 such as a brewing unit, delimiting in the holding and processing position an inner flavouring chamber for receiving and housing an ingredient of the beverage such as a flavouring ingredient, in particular a pre-portioned ingredient supplied within capsule 2, and for guiding via an inlet an incoming flow of liquid for flavouring thereof, such as water, through this ingredient to a beverage outlet;
b) an in-line heater 4 for heating this flow of liquid to be supplied to ingredient 2;
c) a pump 5 for pumping liquid through the in-line heater;
d) one or more fluid connecting members 6 for guiding liquid from a source of liquid, such as tank of liquid;
e) an electric control unit 60, in particular comprising a printed circuit board (PCB), for receiving instructions from a user via an input user-interface (70,70') and for controlling in-line heater 4 and the pump 5; and/or
f) one or more sensors for sensing at least one characteristic selected from characteristics of processing module 10, in-line heater 4, pump 5, the liquid tank, an ingredient collector, a flow of the liquid (e.g. by a flowmeter), a pressure of the liquid and a temperature of the liquid, and for communicating such characteristic(s) to control unit 60.

Heater 4 may be a thermoblock or an on demand heater (ODH), for instance an ODH type disclosed in EP 1 253 844, EP 1 380 243 and EP 1 809 151. Examples of suitable brewing units and capsule management are for example disclosed in WO 2005/004683, WO2007/135136 and WO 2009/043630, which are hereby incorporated by way of reference. Suitable fluid circuits of beverage preparation modules are for instance disclosed in WO 2009/074550 and WO 2009/130099, which are hereby incorporated by way of reference.

Furthermore, in this particular embodiment of the invention, machine 1 includes a motor means 50 for relatively moving first and second parts 20,30 from the processing position for housing ingredient 2 (Figs 4, 8 and 8a) to the transfer position (Figs 2, 3, 5, 6, 7 and 7a) and/or vice versa. Motor means 50 comprises an electric motor 51 and a mechanical converter 52 for converting movements from motor 51 into relative movements between first and second parts 20,30.

Figs 7a and 8a illustrate motor 51 and converter 52 driving downstream part 30 from the transfer position (Fig. 7a) to the processing position (Fig. 8a).

In particular, mechanical converter 52 may include a gear, e.g. toothed gear, and/or cam arrangement. For instance, converter 52 includes a toothed wheel 521 that engages with a worm gear 511 formed on the rotating drive axis of motor 51. Toothed wheel 521 is fixed via rod 522 to a pair of transmission toothed wheels 523. Latter wheels 523 engage with corresponding toothed wheels 524, e.g. wheel sectors, that bear each a cam-follower 525 for cooperation with a cam 35 of movable second part 30 of processing module 10. Wheels 524 are pivotally mounted via a pivoting axis 526 on a frame or housing or another part of machine 1, such as onto part 20 of processing module 10. Likewise, rod 522 may be pivotally mounted on a frame or housing 100 or another part of machine 1, e.g. part 20.

Furthermore, machine 1 has a control unit 60 (illustrated in Fig. 4) for controlling motor means 50 to relatively move first and second parts 20,30. Typically, control unit 60, e.g. a printed circuit board (PCB) with a controller or processor and memory device etc..., is electrically connected to a triac or another electrically controlled switch 61 for controlling the electric powering of motor 51 via an appropriate electric connection 62.

Machine 1 also includes a user-interface 70,70' connected to control unit 60, e.g. via an appropriate electric connection 63. User-interface 70,70' is arranged for sensing a user-request. For instance, this user-interface is a touch-sensitive interface, e.g. a push button 70 or a capacitive button 70'. The interface may also be a photosensitive user-selector.

In the particular examples illustrated in the appended Figures, first and second parts 20,30 are relatively movable by motor means 50 in a linear direction, namely in a straight direction. Alternatively, the first and second parts can be relatively movable by the motor means in an arched direction, or in an arched and linear direction, e.g. sequentially arched and then linear and/or vice versa.

Typically, machine 1 has a stationary structure 100, such as a housing and/or a frame, the second part 30 being movable by motor means 50 relative to the first part and relative to the stationary structure. The first part may include a fixed structure 25, in particular including a hydraulic cylinder, and a secondary structure 26, such as a hydraulic piston member including an ingredient or capsule cage. Secondary structure 26 may be slightly movable relative to fixed structure 25, for example to adjust the closing distance between first and second relatively movable parts 20,30, e.g. to ensure proper handling of ingredient/capsule 2 inserted therebetween. Examples of such hydraulic positioning are for instance disclosed in EP 2 142 054.

The exemplary embodiment of machine 1 according to the invention will now be discussed in greater details in relation to ingredient passage 95,96 and ingredient gate 90. The ingredient passage has an insertion portion 95 for inserting ingredient 2 into the processing module 10 and an evacuation portion 96 for evacuating ingredient 2 therefrom (Fig. 7). Typically, the ingredient gate is directly or indirectly driven by motor means 50 between a position (Figs 2, 3, 5, 6, 7 and 7a) opening and a position (Figs 1, 4, 8 and 8a) closing passage 95,96.

A displacement of the movable second part 30 in one direction 35,36 may be coordinated with a displacement of the gate in a diverging direction, in particular in a generally opposite direction 35',36', as illustrated in Figs 7 and 8. In another embodiment (not shown), the displacement directions may be generally similar.

Hence, machine 1 may include an outermost housing 100. Ingredient passage 95,96 can extend from outermost housing 100 to ingredient processing module 10, the gate 90 being movable along a portion of housing 100 generally parallel thereto, as illustrated in Figs 1 to 4 and 5.

Passage 95,96 is generally upright so that ingredient 2 is movable in the passage under the effect of gravity. Passage 95,96 extends inbetween parts 20,30 in the open position, as illustrated in Figs 3 and 4. As mentioned above, the passage comprises an insertion portion 95 guiding ingredient 2 from housing 100 into processing module 10 and an evacuation portion 96 guiding ingredient 2 from processing module to a used ingredient collector located in an area 102 underneath module 10.

Gate 90, e.g. a generally plate-like member, can be drivable in a generally horizontal direction, movable part 30 being optionally movable in a horizontal direction. Alternatively, the gate can be made pivotable optionally in combination with a linearly movable second part, or vice versa. In the latter case, a linear movement is converted into a rotational movement, or vice versa, by the intermediate mechanical conversion mechanism, e.g. by means of a wheel and a cooperating rack only.

Gate 90 can be configured to support in the closed position (Figs 1, 4 and 8) ingredient 2, especially contained within a capsule, and to free ingredient 2 into or out of the passage 95,96 when gate 90 is moved into the open position (Figs 3, 6 and 7).

Machine 1 will now be described in greater details in relation with its user-control arrangement.

As mentioned above, machine 1 has a sensing arrangement 70,70'. This arrangement is configured for sensing a user-request by a user-actuation of the sensing arrangement. Control unit 60 contains different control programs for controlling the ingredient processing module executable on corresponding user-requests, namely when the machine's user-interface is correspondingly actuated.

In accordance with the invention, sensing arrangement 70,70' and control unit 60 are so arranged that each of said different user-requestable control programs is executed on a user-actuation of the sensing arrangement 70,70' only. Hence, user-interface 70,70' is configured to sense only one form of actuation for identifying a user-request pertaining to any of the user-requestable programs. This simplifies greatly the user-operation, construction and costs of user-interface.

Hence, sensing arrangement 70,70' is normally a single user-selector, e.g. a push-button 70 as illustrated in Figs 1 to 6 or a capacitive button 70' as illustrated in Figs. 7 and 8.

As illustrated in the first stage (Fig. 1) of the sequence shown in Figs. 1 to 6, control unit 60 may contain a user-requestable powering program for starting up the machine on user-actuation of the sensing arrangement 70 in a shut-off state. Hence, sensing arrangement 70 may serve as a power switch when machine 1 is in a switched off state. When powering program is executed, machine 1 is brought into a start-up mode during which heater 4, an in-line thermal accumulation heater such as a thermoblock, is driven to its operative temperature. This start-up process may typically last from 10 to 90 seconds depending on the heater and the start-up algorithm. During the start-up procedure, parts 20,30 may be in the holding configuration (Fig. 1) or in the transfer configuration (Fig. 2) or may be in an intermediate configuration, e.g. half open, indicating the transition between the inactive state and the operative state of machine 1.

As mentioned above, ingredient processing module 10 may be motorized to drive parts 20,30 of the handling unit apart and together as required. Control unit 60 may be arranged to bring handling unit 20,30 automatically into the holding configuration at shut-off (Fig. 1) and into the loading configuration upon start-up (Fig. 2). Control unit 60 may be arranged to bring handling unit 20,30 automatically into the loading configuration at an end of a beverage preparation (Fig. 5).

In an embodiment, control unit 60 comprises an auto-shut off module for shutting off machine 1 automatically. This module may including a timer and/or a beverage preparation counter, such as a factory preset and/or user-programmable auto-shut off module. Typically, the auto-shut off module is arranged to switch off machine 1 automatically after a period of time of non-use in the range of 1 to 30 min, such as 5 to 20 min or about 10 to 15 min.

Control unit 60 contains a user-requestable beverage preparation program. Such a program normally includes a set of instructions for controlling heater 4 and pump 5 in a manner appropriate for preparing the requested beverage. E.g. For preparing an espresso coffee, pump 5 may be controlled to circulate 25 to 40 ml water at 10 to 20 bar through brewing unit 20,30 and heater 4 may be configured to heat the circulated water to a temperature of 88 to 94°C.

Control unit 60 may be arranged to register a beverage user-request via sensing arrangement 70,70' after powering or start-up of such machine, as indicated in Fig. 3.

Machine 1 may include an ingredient sensor, e.g. an optic, electric, magnetic and/or mechanic capsule detector as known in the art, in or adjacent to the ingredient processing module 10. This ingredient sensor can be connected to control unit 60, the control unit 60 being arranged to register a beverage user-request via the sensing arrangement 70,70' when a beverage ingredient is sensed, as illustrated in Fig. 3.

Control unit 60 may contain a user-requestable beverage stop program, the control unit 60 being arranged to register a beverage stop request via the sensing arrangement 70,70' during execution of a beverage preparation program. Hence, when a user is satisfied with the dispensed volume of beverage, beverage preparation may be ended by user-actuation of sensing arrangement 70,70'.

The control unit 60 contains a first and a second user-requestable beverage preparation program, the first program being requestable by a single user-actuation of the sensing arrangement 70,70', the second user-requestable beverage preparation program being requestable by a repeated-user actuation of the sensing arrangement, such a double user-actuation of the sensing arrangement, typically within a short time frame, e.g. 1 to 2 seconds.

Control unit 60 may contain a beverage preparation program that has a parameter which is user-programmable upon executing a user-programming program executed on a predetermined sequence of user-actuations of the sensing arrangement 70,70'.

Machine 1 may include a sensor in or adjacent to the ingredient processing module. Control unit 60 can contain a user-requestable service program, such as a cleaning and/or rinsing program, the control unit being arranged to register a service user-request via sensing arrangement 70,70' when no beverage ingredient is sensed or when a service accessory, such as a cleaning capsule 2, is sensed via the sensor. Control unit 60 may contain a user-requestable service stop program and be arranged to register a service stop request via the sensing arrangement 70,70' during execution of the service program.

Machine 1 may comprise only one user-indicator 90, such as a visual and/or sound indicator, for indicating a machine state, such as a LED or a sound generator, optionally the user-indicator being arranged for indicating a plurality of different machine state, in particular by corresponding indication sequences. In particular gate 90 may serve as a user indicator for indicating a state of shut-off of machine 1 (Fig. 1) an intermediate state of start-up, a state of readiness for an ingredient loading (Fig. 2), a state of beverage processing in combination with beverage dispensing via outlet 40 (Fig. 4), and a state of returned readiness for an ingredient loading (Fig. 6).

Other machine states may be indicated via the single user-indicator, e.g. a semi-open gate 90. Indicator 90 may indicate a transitional state, as mentioned above, and/or a state of malfunctioning or disorder such as overheating and/or liquid shortage and/or problem at closure of ingredient handling arrangement 20,30 e.g. because an inappropriate object is introduced, such as a human hand 3 or a wrong ingredient.

The user-indicator may have only one function, i.e. present an information to a user, e.g. in the form of a LED. Alternatively, the user-indicator may have one or more further functions in addition to presenting information to the user, e.g. close or open a capsule insertion passage.

## Claims

1. A machine (1) for preparing a beverage comprising:
- an ingredient processing module (10) for processing at least one ingredient, in particular an ingredient supplied within a capsule (2) into the module;
- a sensing arrangement (70,70') for sensing a user-request by a user-actuation of the sensing arrangement; and
- a control unit (60) containing different control programs for controlling the ingredient processing module executable on corresponding user-requests,
**characterised in that** the sensing arrangement (70,70') has a single actuation state detection, i.e. actuation detected or not detected, and **in that** the sensing arrangement (70,70') and the control unit (60) are so arranged that each of said different user-requestable control programs is executed on a user-actuation of the sensing arrangement (70,70') only and the identification of the relevant user-requestable control program linked to said user-actuation of the sensing arrangement (70,70') among said different user-requestable control programs is carried out based on a state of the machine at the time of said user-actuation of the sensing arrangement (70,70'),
wherein the control unit (60) contains a user-requestable beverage preparation program,
wherein the control unit (60) contains a first and a second user-requestable beverage preparation program, the first program being requestable by a single user-actuation of the sensing arrangement (70, 70'), the second user-requestable beverage preparation program being requestable by a repeated user-actuation of the sensing arrangement, such as a double user-actuation of the sensing arrangement.

2. The machine of claim 1, wherein the sensing arrangement is a single user-selector (70,70') selected from touch, push, turn, and toggle user-selectors such as a touch pad, a push button (70), a touch-plate (70'), a turn button or a toggle lever, in particular an automatic return toggle lever.

3. The machine of any preceding claim, wherein the control unit (60) contains a user-requestable powering program for starting up the machine on user-actuation of the sensing arrangement (70,70') in a shut-off state, optionally such machine (1) comprising a thermal conditioner, such as a heater (4), that is powered to reach an operative temperature during start up.

4. The machine of any preceding claim, wherein the ingredient processing module (10) comprises a motorized ingredient handling unit (20,30) that has a holding configuration for preparing a beverage from said ingredient (2) and a loading configuration for loading said ingredient into the handling unit.

5. The machine of claim 4, wherein the control unit (60) is arranged to bring the handling unit (20,30) automatically into the holding configuration at shut-off and into the loading configuration upon start-up.

6. The machine of claim 4 or 5, wherein the control unit (60) is arranged to bring the handling unit (20,30) automatically into the loading configuration at an end of a beverage preparation.

7. The machine of any preceding claim, wherein the control unit (60) comprises an auto-shut off module for shutting off such machine automatically, in particular a module including a timer and/or a beverage preparation counter, such as a factory-preset and/or user-programmable auto-shut off module.

8. The machine of claim 1, wherein the control unit (60) is arranged to register a beverage user-request via the sensing arrangement (70,70') after powering or start-up of such machine (1).

9. The machine of claim 1 or 8, which comprises an ingredient sensor in or adjacent to the ingredient processing module (10), the ingredient sensor being connected to the control unit (60), the control unit (60) being arranged to register a beverage user-request via the sensing arrangement (70,70') when a beverage ingredient is sensed.

10. The machine of any one of claims 1 or 8 to 9, wherein the control unit (60) contains a user-requestable beverage stop program, the control unit (60) being arranged to register a beverage stop request via the sensing arrangement (70,70') during execution of a beverage preparation program.

11. The machine of any one of claims 1 or 8 to 10, wherein the control unit (60) contains a beverage preparation program that has a parameter which is user-programmable upon executing a user-programming program executed on a predetermined sequence of user-actuations of the sensing arrangement (70,70').

12. The machine of any preceding claim, which comprises a sensor in or adjacent to the ingredient processing module, wherein the control unit (60) contains a user-requestable service program, such as a cleaning and/or rinsing program, the control unit being arranged to register a service user-request via the sensing arrangement (70,70') when no beverage ingredient is sensed or when a service accessory is sensed via the sensor, optionally the control unit containing a user-requestable service stop program and being arranged to register a service stop request via the sensing arrangement (70,70') during execution of the service program.

13. The machine of any preceding claim, which comprises only one user-indicator, such as a visual and/or sound indicator, for indicating a machine state, such as a LED or a sound generator, optionally the user-indicator being arranged for indicating different machine states, in particular by corresponding indication sequences.

## Patentansprüche

1. Maschine (1) zum Zubereiten eines Getränks, umfassend:
- ein Inhaltsstoffverarbeitungsmodul (10) zum Verarbeiten von mindestens einem Inhaltsstoff, insbesondere einem Inhaltsstoff, der dem Modul innerhalb einer Kapsel (2) zugeführt wird;
- eine Erfassungsanordnung (70,70') zum Erfassen einer Benutzeranforderung durch eine Benutzerbetätigung der Erfassungsanordnung; und
- eine Steuereinheit (60), die verschiedene Steuerprogramme zum Steuern des Inhaltsstoffverarbeitungsmoduls enthält, die bei entsprechenden Benutzeranforderungen ausführbar sind,
**dadurch gekennzeichnet, dass** die Erfassungsanordnung (70, 70') eine einzige Betätigungszustandserkennung aufweist, d. h. Betätigung erkannt oder nicht erkannt, und **dadurch, dass** die Erfassungsanordnung (70, 70') und die Steuereinheit (60) so angeordnet sind, dass jedes der verschiedenen, vom Benutzer anforderbaren Steuerprogramme nur bei einer Benutzerbetätigung der Erfassungsanordnung (70, 70') ausgeführt wird und die Identifizierung des relevanten vom Benutzer anforderbaren Steuerprogramms, das mit der Benutzerbetätigung der Erfassungsanordnung (70, 70') verknüpft ist, unter den verschiedenen, vom Benutzer anforderbaren Steuerprogrammen basierend auf einem Zustand der Maschine zum Zeitpunkt der Benutzerbetätigung der Erfassungsanordnung (70, 70') durchgeführt wird, wobei die Steuereinheit (60) ein vom Benutzer anforderbares Getränkezubereitungsprogramm enthält, wobei die Steuereinheit (60) ein erstes und ein zweites vom Benutzer anforderbares Getränkezubereitungsprogramm enthält, wobei das erste Programm durch eine einzige Benutzerbetätigung der Erfassungsanordnung (70, 70') anforderbar ist, wobei das zweite, vom Benutzer anforderbare Getränkezubereitungsprogramm durch eine wiederholte Benutzerbetätigung der Erfassungsanordnung anforderbar ist, wie etwa eine doppelte Benutzerbetätigung der Erfassungsanordnung.

2. Maschine nach Anspruch 1, wobei die Erfassungsanordnung ein einzelnes Benutzerauswahlelement (70,70') ist, das ausgewählt ist aus Berührungs-, Druck-, Dreh- und Umschaltungsbenutzerauswahlelementen, wie etwa einem Berührungsfeld, einer Drucktaste (70), einer Berührungsplatte (70'), einem Drehregler oder einem Umschalthebel, insbesondere einem Umschalthebel mit automatischer Rückstellung.

3. Maschine nach einem der vorstehenden Ansprüche, wobei die Steuereinheit (60) ein vom Benutzer anforderbares Aktivierungsprogramm zum Einschalten der Maschine bei Benutzerbetätigung der Erfassungsanordnung (70,70') in einem Ausschaltzustand enthält, eine derartige Maschine (1) optional umfassend eine Wärmekonditionierungseinrichtung, wie etwa eine Heizeinrichtung (4), die beim Einschalten aktiviert wird, um eine Betriebstemperatur zu erreichen.

4. Maschine nach einem der vorstehenden Ansprüche, wobei das Inhaltsstoffverarbeitungsmodul (10) eine motorisierte Inhaltsstoffhandhabungseinheit (20,30) umfasst, die eine Haltekonfiguration zum Zubereiten eines Getränks aus dem Inhaltsstoff (2) und eine Ladekonfiguration zum Laden des Inhaltsstoffs in die Handhabungseinheit aufweist.

5. Maschine nach Anspruch 4, wobei die Steuereinheit (60) angeordnet ist, um die Handhabungseinheit (20,30) automatisch beim Ausschalten in die Haltekonfiguration und beim Einschalten in die Ladekonfiguration zu bringen.

6. Maschine nach Anspruch 4 oder 5, wobei die Steuereinheit (60) angeordnet ist, um die Handhabungseinheit (20,30) an einem Ende einer Getränkezubereitung automatisch in die Ladekonfiguration zu bringen.

7. Maschine nach einem der vorstehenden Ansprüche, wobei die Steuereinheit (60) ein Ausschaltautomatikmodul zum automatischen Ausschalten einer derartigen Maschine umfasst, insbesondere ein Modul, das einen Timer und/oder einen Getränkezubereitungszähler einschließt, wie etwa ein ab Werk voreingestelltes und/oder vom Benutzer programmierbares Ausschaltautomatikmodul.

8. Maschine nach Anspruch 1, wobei die Steuereinheit (60) angeordnet ist um nach dem Aktivieren oder Einschalten einer derartigen Maschine (1) eine Getränkebenutzeranforderung über die Erfassungsanordnung (70,70') zu registrieren.

9. Maschine nach Anspruch 1 oder 8, die einen Inhaltsstoffsensor in oder angrenzend zu dem Inhaltsstoffverarbeitungsmodul (10) umfasst, wobei der Inhaltsstoffsensor mit der Steuereinheit (60) verbunden ist, wobei die Steuereinheit (60) angeordnet ist, um eine Getränkebenutzeranforderung über die Erfassungsanordnung (70,70') zu registrieren, wenn ein Getränkeinhaltsstoff erfasst wird.

10. Maschine nach einem der Ansprüche 1 oder 8 bis 9, wobei die Steuereinheit (60) ein vom Benutzer anforderbares Getränkestoppprogramm enthält, wobei die Steuereinheit (60) angeordnet ist, um eine Getränkestoppanforderung über die Erfassungsanordnung (70,70') während der Ausführung eines Getränkezubereitungsprogramms zu registrieren.

11. Maschine nach einem der Ansprüche 1 oder 8 bis 10, wobei die Steuereinheit (60) ein Getränkezubereitungsprogramm enthält, das einen Parameter aufweist, der vom Benutzer programmierbar ist, wenn ein Benutzerprogrammierungsprogramm bei einer zuvor bestimmten Folge von Benutzerbetätigungen der Erfassungsanordnung (70,70') ausgeführt wird.

12. Maschine nach einem der vorstehenden Ansprüche, die einen Sensor in oder angrenzend zu dem Inhaltsstoffverarbeitungsmodul umfasst, wobei die Steuereinheit (60) ein vom Benutzer anforderbares Wartungsprogramm, wie etwa ein Reinigungs- und/oder Spülprogramm, enthält, wobei die Steuereinheit angeordnet ist, um eine Wartungsbenutzeranforderung über die Erfassungsanordnung (70,70') zu registrieren, wenn kein Getränkeinhaltsstoff erfasst wird, oder wenn ein Wartungszubehörteil über den Sensor erfasst wird, wobei die Steuereinheit optional ein vom Benutzer anforderbares Wartungsstoppprogramm enthält und angeordnet ist, um eine Wartungsstoppanforderung über die Erfassungsanordnung (70,70') während der Ausführung des Wartungsprogramms zu registrieren.

13. Maschine nach einem der vorstehenden Ansprüche, die nur eine Benutzeranzeige, wie etwa eine optische und/oder akustische Anzeige umfasst, zum Anzeigen eines Maschinenzustands, wie etwa eine LED oder einen Tonerzeuger, wobei die Benutzeranzeige optional zum Anzeigen verschiedener Maschinenzustände, insbesondere durch entsprechende Anzeigefolgen, angeordnet ist.

## Revendications

1. Machine (1) permettant de préparer une boisson comprenant :
- un module de traitement d'ingrédient (10) destiné à traiter au moins un ingrédient, en particulier un ingrédient fourni à l'intérieur d'une capsule (2) dans le module ;
- un dispositif de détection (70, 70') destiné à détecter une demande utilisateur par une action utilisateur du dispositif de détection ; et
- une unité de commande (60) contenant différents programmes de commande, afin de commander le module de traitement d'ingrédient, exécutables lors de demandes utilisateur correspondantes,
**caractérisée en ce que** le dispositif de détection (70, 70') ne détecte qu'un seul état d'action, à savoir action détectée ou non détectée, et **en ce que** le dispositif de détection (70, 70') et l'unité de commande (60) sont conçus de telle sorte que chacun desdites différents programmes de commande pouvant être demandés par l'utilisateur est exécuté sur une action utilisateur du dispositif de détection (70, 70') uniquement et l'identification du programme de commande pouvant être demandé par l'utilisateur pertinent lié à ladite action utilisateur du dispositif de détection (70, 70') parmi lesdits différents programmes de commande pouvant être demandés par l'utilisateur est effectuée sur la base d'un état de la machine au moment de ladite action utilisateur du dispositif de détection (70, 70'),
dans laquelle l'unité de commande (60) contient un programme de préparation de boisson pouvant être demandé par l'utilisateur,
dans laquelle l'unité de commande (60) contient un premier et un second programme de préparation de boisson pouvant être demandé par l'utilisateur, le premier programme pouvant être demandé par une seule action utilisateur sur le dispositif de détection (70, 70'), le second programme de préparation de boisson pouvant être demandé par l'utilisateur pouvant être demandé par une action répétée de l'utilisateur sur le dispositif de détection, telle qu'une double action utilisateur sur le dispositif de détection.

2. Machine selon la revendication 1, dans laquelle le dispositif de détection est un sélecteur pour utilisateur unique (70, 70') sélectionné parmi des sélecteurs pour utilisateur, tactiles, de poussée, rotatifs et basculants, tels qu'un pavé tactile, un bouton-poussoir (70), une plaque tactile (70'), un bouton rotatif ou un levier basculant, en particulier un levier basculant à retour automatique.

3. Machine selon l'une quelconque revendication précédente, dans laquelle l'unité de commande (60) contient un programme de mise en marche pouvant être demandé par l'utilisateur pour démarrer la machine lors d'une action utilisateur du dispositif de détection (70, 70') dans un état arrêté, éventuellement, une telle machine (1) comprenant un appareil de conditionnement thermique, tel qu'un dispositif de chauffage (4) qui est mis en marche pour atteindre une température fonctionnelle pendant le démarrage.

4. Machine selon l'une quelconque revendication précédente, dans laquelle le module de traitement d'ingrédient (10) comprend une unité de manipulation d'ingrédient motorisée (20, 30) qui a une configuration de retenue afin de préparer une boisson à partir dudit ingrédient (2) et une configuration de charge afin de charger ledit ingrédient dans l'unité de manipulation.

5. Machine selon la revendication 4, dans laquelle l'unité de commande (60) est conçue pour amener l'unité de manipulation (20, 30) automatiquement dans la configuration de retenue lors de l'arrêt et dans la configuration de charge lors du démarrage.

6. Machine selon la revendication 4 ou 5, dans laquelle l'unité de commande (60) est conçue pour amener l'unité de manipulation (20, 30) automatiquement dans la configuration de charge à la fin d'une préparation de boisson.

7. Machine selon l'une quelconque revendication précédente, dans laquelle l'unité de commande (60) comprend un module d'arrêt automatique afin d'arrêter une telle machine automatiquement, en particulier un module comportant une minuterie et/ou un compteur de préparation de boisson, tel qu'un module d'arrêt automatique préréglé en usine et/ou programmable par l'utilisateur.

8. Machine selon la revendication 1, dans laquelle l'unité de commande (60) est conçue pour enregistrer une demande de boisson d'utilisateur par l'intermédiaire du dispositif de détection (70, 70') après mise en marche ou démarrage d'une telle machine (1).

9. Machine selon la revendication 1 ou 8, qui comprend un capteur d'ingrédient dans ou à côté du module de traitement d'ingrédient (10), le capteur d'ingrédient étant connecté à l'unité de commande (60), l'unité de commande (60) étant conçue pour enregistrer une demande de boisson d'utilisateur par l'intermédiaire du dispositif de détection (70, 70') lorsqu'un ingrédient de boisson est détecté.

10. Machine selon l'une quelconque des revendications 1 ou 8 à 9, dans laquelle l'unité de commande (60) contient un programme d'arrêt de boisson pouvant être demandé par l'utilisateur, l'unité de commande (60) étant conçue pour enregistrer une demande d'arrêt de boisson par l'intermédiaire du dispositif de détection (70, 70') pendant l'exécution d'un programme de préparation de boisson.

11. Machine selon l'une quelconque des revendications 1 ou 8 à 10, dans laquelle l'unité de commande (60) contient un programme de préparation de boisson qui a un paramètre qui est programmable par l'utilisateur lors de l'exécution d'un programme de programmation par l'utilisateur exécuté sur une séquence prédéfinie d'actions utilisateur du dispositif de détection (70, 70').

12. Machine selon l'une quelconque revendication précédente, qui comprend un capteur dans ou à côté du module de traitement d'ingrédient, dans laquelle l'unité de commande (60) contient un programme d'entretien pouvant être demandé par l'utilisateur, tel qu'un programme de nettoyage et/ou de rinçage, l'unité de commande étant conçue pour enregistrer une demande d'entretien par l'utilisateur par l'intermédiaire du dispositif de détection (70, 70') lorsqu'aucun ingrédient de boisson n'est détecté ou lorsqu'un accessoire d'entretien est détecté par l'intermédiaire du capteur, éventuellement, l'unité de commande contenant un programme d'arrêt d'entretien pouvant être demandé par l'utilisateur et étant conçu pour enregistrer une demande d'arrêt d'entretien par l'intermédiaire du dispositif de détection (70, 70') pendant l'exécution du programme d'entretien.

13. Machine selon l'une quelconque revendication précédente, qui ne comprend qu'un seul indicateur pour l'utilisateur, tel qu'un indicateur visuel et/ou sonore, destiné à indiquer un état de machine, tel qu'un générateur de son ou une DEL, éventuellement, l'indicateur pour l'utilisateur étant conçu pour indiquer différents états de machine, en particulier par des séquences d'indication correspondantes.
